# EUROPÄISCHE PATENTSCHRIFT

(11) **EP 3 706 546 B1**
(45) Veröffentlichungstag und Bekanntmachung des Hinweises auf die Patenterteilung: **17.08.2022**
(21) Anmeldenummer: 18799727.5
(22) Anmeldetag: 06.11.2018
(51) Int. Cl.: A01D 75/18, A01D 89/00

(54) **PICK-UP MIT METALLDETEKTOR**
PICK-UP WITH METAL DETECTOR
RAMASSEUSE POURVUE D'UN DÉTECTEUR DE MÉTAUX

(30) Priorität: 10.11.2017 DE 102017126413
(43) Veröffentlichungstag der Anmeldung: 16.09.2020
(73) Patentinhaber: B. Strautmann & Söhne GmbH u. Co. KG, 49196 Bad Laer (DE)
(72) Erfinder: OELGESCHLÄGER, Oliver, 49163 Bohmte (DE)
(74) Vertreter: Dr. Träger & Strautmann PAe PartG mbB
(86) Internationale Anmeldenummer: PCT/EP2018/080283
(87) Internationale Veröffentlichungsnummer: WO 2019/091957

(56) Entgegenhaltungen:
- EP-A1- 1 498 019
- DE-A1- 2 940 201
- US-A- 4 720 962

## Beschreibung

Die Erfindung betrifft eine Aufnahmevorrichtung für eine landwirtschaftliche Maschine zur Ernte von Halm- und Blattgut umfassend:
- Fördermittel zum Transport eines Erntegutstroms, wobei die Fördermittel den Erntegutstrom durch einen Überwachungsbereich bewegen,
- wenigstens einen Metalldetektor zur Erkennung von metallischen Fremdkörpern im Überwachungsbereich befindlichen Erntegutstrom, wobei der Metalldetektor Magnete zur Erzeugung eines Magnetfeldes umfasst, so dass in Abhängigkeit von elektrischen Signalen bei Detektion von Metallteilen im Erntegut mittels eines Steuersignals Antriebselemente der Aufnahmevorrichtung und/oder weiterer nachgeordneter Maschinenkomponenten schaltbar sind.

Bei den regelmäßig auf Ernteflächen vorzufindenden Metallteilen kann es sich beispielsweise um abgebrochene Förderzinken anderer Landmaschinen handeln. Normalerweise bestehen die Förderzinken aus Stahl und sind beim Betrieb der Landmaschine oft sich verändernden Belastungen ausgesetzt, verbiegen sich und brechen. Die gebrochenen Förderzinken können dann in die Schneidvorrichtung und schließlich ins Tierfutter gelangen. Ebenso können die im Futterschwad zufällig befindliche metallenen Gegenstände oder ihre Bruchteile für die Funktionalität der Landmaschine und die Homogenität des Futtermittels gefährlich sein.

Eine im Oberbegriff beschriebene Vorrichtung mit Metalldetektor ist der EP 1 498 019 A1 zu entnehmen. Die bekannte Vorrichtung wird vorzugsweise in Feldhäckslern eingesetzt, deren Einzugsbereich zwei übereinander liegende Vorpresswalzen umfasst, welche einem Maisgebiss nachgeschaltet sind. In die untere Vorpresswalze ist ein Metalldetektor eingebaut, welcher ein Magnetfeld erzeugt und einen Spalt zwischen den beiden Vorpresswalzen überwacht. Dabei sind der Metalldetektor und seine Befestigungselemente aus nicht magnetisierbarem Material gefertigt. Auch die Vorpresswalzen sind aus Funktions- und Verschleißgründen aus nichtmagnetisierbarem Stahl hergestellt.

Mit dem Metalldetektor gemäß EP 1 498 019 A1 werden etwaige metallische Fremdkörper erst sehr spät, nämlich unmittelbar vor der Verarbeitung bzw. dem Häckseln des Ernteguts, erkannt. Auch das Aussortieren detektierter Metallteile ist schwierig, weil das Erntegut sich bereits tief in der Maschine befindet. Weiterhin umfassen nicht alle Erntemaschinen für Halm- und Blattgut Vorpresswalzen, in die sich ein Metalldetektor integrieren ließe. Zu diesen Maschinen ohne Vorpresswalzen zählen beispielsweise Ladewagen oder BallenPressen mit einer Aufnahmevorrichtung für Halm- und Blattgut in Form einer sogenannten Pick-up.

Die Pick-up ist eine Komponente in der Landtechnik zur Aufnahme von Halm und Blattgut und kann gesteuert oder ungesteuert sein. In jedem Fall weist sie nach außen weisende Förderzinken auf. Im Fall einer gesteuerten Pick-up sind die Förderzinken an Zinkenträgern montiert, die, gesteuert durch eine Kurvenbahn, geführt werden. Im Fall einer ungesteuerten Pick-up befinden sich die Förderzinken auf einer rotierenden Trommel.

Aus DE 10 2007 025 310 A1 ist eine Aufnahmevorrichtung für eine landwirtschaftliche Maschine zur Ernte von Halm- und Blattgut bekannt, bei der ein mit einer Pick-up 3 ausgestattetes Erntevorsatzgerät 4 das Erntegut vom Feldboden aufnimmt. Das mehrere Meter breite Erntevorsatzgerät 4 führt das Erntegut 5 in einen wesentlich schmaleren, der Breite des Förderkanals 8 entsprechenden Einzugsbereich 9 zusammen. Über diesen Einzugsbereich wird das Erntegut 5 von einem ersten Vorpresswalzenpaar 10 aufgenommen und verdichtet. Innerhalb des Vorpresswalzenpaars 10 ist eine Metalldetektor 21 angeordnet, welche ein Magnet-Messfeld M erzeugt.

Das Magnet-Messfeld M ist nach oben in den Erntegutstrom ausgerichtet ist und überwacht den unmittelbar vor den Vorpresswalzen angeordneten Bereich. Somit wird weder der in Fahrtrichtung gesehen vor der Pick-up liegende Bereich noch der Bereich der Pick-up selbst überwacht, sondern lediglich ein der Pick-up nachgelagerter Bereich.

Die in DE 10 2007 025 310 A1 vorgesehene Anordnung des Metalldetektors hat den Vorteil, dass der Erntegutstrom nicht auf seiner gesamten Breite bei Aufnahme durch die Pick-up überwacht werden muss, sondern lediglich auf einer Breite, die der Breite des Förderkanals 8 entspricht. Nachteilig ist jedoch, dass der Erntegutstrom erst untersucht wird, nachdem er die Pick-up passiert hat, so dass zum einen etwaige im Erntegutstrom enthaltene Fremdkörper die Pick-up beschädigen können und zum anderen sehr wenig Zeit zur Verfügung steht um den Erntegutstrom zu unterbrechen bevor ein detektierter Fremdkörper in den Bereich der empfindlichen Schneidwerkzeuge der Erntemaschine gelangt.

Aus DE 29 40 201 A1 ist ein Feldhäcksler mit einem Metalldetektor bekannt, welcher aus mehreren über die Breite der Förderstrecke verteilten Näherungsinitiatoren besteht. Die Näherungsinitiatoren sind hinter einem nicht leitenden Abschirmelement angeordnet, welches beispielsweise aus Kunststoff besteht. Funktionsbedingt erzeugend die Näherungsinitiatoren ein Suchfeld mit einer vorbestimmten, relativ dünnen, Eindringtiefe in den Erntegutstrom. Soweit die Durchdringungstiefe des Suchfeldes nicht ausreicht, können Näherungsinitiatoren auf beiden Seiten des Erntegutstroms vorgesehen sein.

Der Metalldetektor gemäß DE 29 40 201 A1 ist in Fahrtrichtung gesehen hinter der Pick-up angeordnet und überwacht somit den Erntegutstrom, nachdem dieser die Pick-up passiert hat. Die Rotationsbewegung der auf der Pick-up angeordneten Federzinken 1 wird durch eine Steuerkurve 2 gesteuert. Die Spitzen der Federzinken durchlaufen deshalb nicht den Überwachungsbereich des Metalldetektors. Dies ist bei dem beschriebenen Ausführungsbeispiel besonders vorteilhaft, weil hierdurch verhindert wird, dass der Metalldetektor die in aller Regel aus Metall gefertigten Federzinken als metallische Fremdkörper detektiert. Nachteilig ist allerdings, dass weder der in Fahrtrichtung gesehen vor der Pick-up liegende Bereich noch der Bereich der Pick-up selbst überwacht werden können.

Aus US 4 720 962 A ist eine Aufnahmevorrichtung mit Metalldetektor für einen Hochgeschwindigkeitsrotor bekannt. Der Hochgeschwindigkeitsrotor befindet sich an einem beweglichen Rahmen und dient dazu, zuvor geschnittenes Erntegut aufzunehmen. Der Metalldetektor kann entweder an der beweglichen Haube oberhalb des Rotors oder an statischen Teilen des Rahmens angeordnet sein.

Es stellt sich daher die Aufgabe, eine neuartige Aufnahmevorrichtung der eingangs genannten Art zu entwickeln, die metallene Fremdkörper frühzeitig erkennt und zudem nicht nur für selbstfahrende oder gezogene Feldhäcksler, sondern auch für andere Erntemaschinen, wie Ballenpressen oder Ladewagen geeignet ist.

Diese Aufgabe wird durch eine Aufnahmevorrichtung mit den Merkmalen des Anspruchs 1 gelöst.

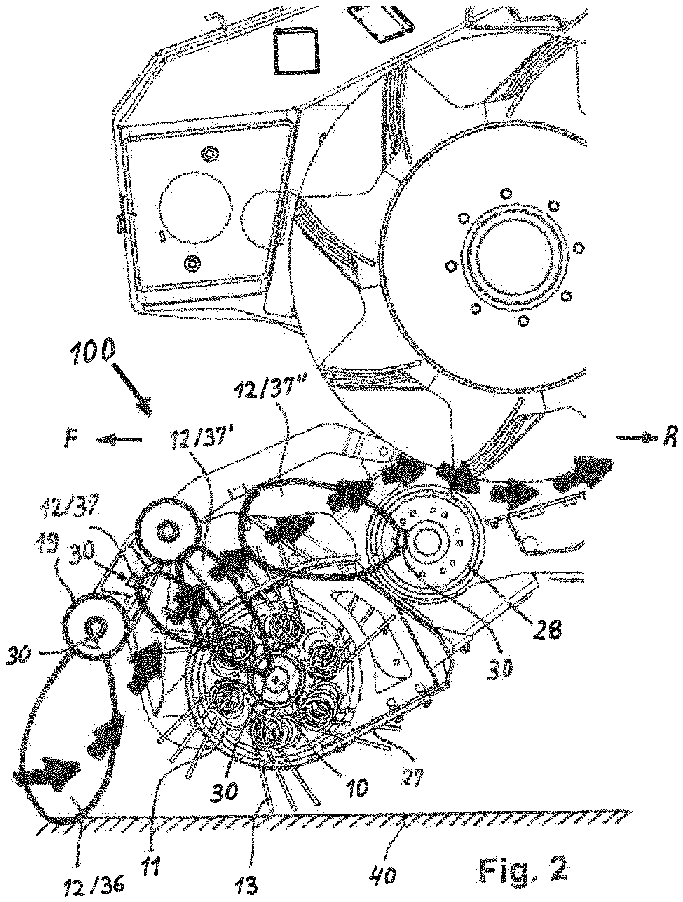

Die im Weiteren verwendeten Begriffe: "obere", "oben", "untere", "linke" oder "rechte" beziehen sich auf eine Aufnahmevorrichtung bzw. eine Landmaschine im Betriebsmodus, wie sie insbesondere in Figur 2 der angehängten Zeichnungen dargestellt ist.

Bei dem Fördermittel zum Transport des Erntegutstroms handelt es sich um eine rotierbare Pick-up-Trommel. Unter einer Pick-up-Trommel wird ein offenes (gesteuerte Pick-up) oder geschlossenes Gebilde (ungesteuerte Pick-up) mit einer Vielzahl von an oder auf der Trommel angebrachten und nach außen abstehenden Förderzinken zur Aufnahme des Ernteguts verstanden.

Gemäß der Erfindung kann ein Metalldetektor an oder in der Pick-up-Trommel angebracht sein. In diesem Fall bestehen alle Teile im Uberwachungsbereich aus nichtmagnetisierbarem Material.

Bei einem in oder an der Pick-up-Trommel angebrachtem Metalldetektor durchlaufen die Förderzinken grundsätzlich den Überwachungsbereich. Die Förderzinken können aus nichtmagnetisierbaren Edelstahlstäben bzw. Edelstahldraht oder aus thermoplastischem Kunststoff, wie Polyurethan, gefertigt sein. Die Förderzinken können über Zinkenringe kraft- oder formschlüssig, jedoch abnehmbar mit der Trommel verbunden sein. Das Durchlaufen der nichtmagnetischen Förderzinken durch den Überwachungsbereich ist nicht nur unproblematisch, sondern kann ausdrücklich gewünscht sein. Befindet sich der Erntegutstrom im Förderzinken-Bereich, hat er eine durch den Abstand von Pick-up-Trommel und Niederhalter vordefinierte Dicke und lässt sich so vollständig und sicher detektieren.

Auch die Trommel selbst ist aus nichtmagnetisierbarem Material hergestellt. Unter dem Begriff Trommel wird nicht nur das Mantelblech des walzenartigen Trommelkörpers verstanden, sondern auch etwaige weitere daran befindliche Teile, wie die Förderzinken und ggf. vorhandene Befestigungsmittel, wie Schrauben. Dadurch, dass somit die Trommel aus nichtmagnetisierbarem Material besteht, ist es möglich, den Metalldetektor unmittelbar in die Trommel zu integrieren. Der Überwachungsbereich durchdringt somit von innen, aus der Trommel heraus, den Futterschwad. Hierdurch vereinfacht sich der Aufbau der Aufnahmevorrichtung.

Bevorzugt wird eine walzenartige, geschlossene Pick-up-Trommel mit Förderzinken, die nicht durch eine Führungsbahn gesteuert werden (ungesteuerte Pick-up). Die Erfindung kann aber auch eingesetzt werden an einer Aufnahmevorrichtung mit einer gesteuerten Pick-up. Eine gesteuerte Pickup umfasst eine Hauptwelle sowie in der Regel fünf oder sechs an die Hauptwelle gekoppelte Trägerwellen, an denen die Förderzinken befestigt sind. Die Trägerwellen werden durch die Hauptwelle auf einer Kreisbahn geführt und schwingen dabei durch einen Exzenterarm, der in einer Kurvenbahn geführt wird. Der vom Metalldetektor detektierte Überwachungsbereich des Erntegutstroms liegt im Bereich der genannten Pick-up-Trommel. Unter "im Bereich der Pick-up-Trommel" wird verstanden, dass der Metalldetektor den Erntegutstrom:
- in einem der Pick-up-Trommel vorgelagerten Bereich, und/oder
- in einem von den Förderzinken der Pick-up-Trommel durchlaufenen Bereich auf das Vorhandensein von Metallteilen detektiert.

Der Metalldetektor ist also nicht tief im Inneren der Maschine, beispielsweise in Vorpresswalzen, die einem Häckselaggregat vorgeschaltet sind, angeordnet, sondern dort, wo das Erntegut vom Boden aufgenommen wird.

In einer kostengünstigen Ausführung kann vorgesehen sein, dass der Erntegutstrom lediglich in einem einzigen Untersuchungsabschnitt detektiert wird. Bei einem einzigen Untersuchungsbereich besteht jedoch ein gewisses Risiko, das unter ungünstigen Voraussetzungen, beispielsweise dann, wenn kleine Metallteile sich an für die Detektion ungünstigen Stellen im Erntegutstrom befinden, diese Metallteile nicht detektiert werden. Um dieses Risiko zu reduzieren, können mehrere Metalldetektoren vorgesehen sein, die den Erntegutstrom in unterschiedlichen Bereichen untersuchen. Die untersuchten Bereiche können so angeordnet sein, dass sie voneinander getrennt sind, beispielsweise indem ein Untersuchungsbereich sich vor der Pick-up-Trommel befindet und ein zweiter Untersuchungsbereich im Bereich der Pick-up-Trommel angeordnet ist. Die Untersuchungsbereiche können voneinander getrennt sein oder sich überlappen.

Der Kern der Erfindung ist, dass ein an sich bekannter Metalldetektor in die Aufnahmevorrichtung der Erntemaschine selbst integriert ist und so einen Überwachungsbereich zur Detektion von Metallteilen ausbildet, welcher es ermöglicht, den Erntegutstrom schon im Bereich der Pick-up und damit unmittelbar nach der Aufnahme vom Untergrund auf das Vorhandensein von Metallteilen zu untersuchen.

Wesentlich ist hierbei, dass die im Überwachungsbereich angeordneten Teile der Aufnahmevorrichtung aus einem nichtmagnetisierbaren Material bestehen. Soweit der Untersuchungsbereich beispielsweise einen Teil der Pick-up-Trommel und/oder der Förderzinken einschließt, müssen diese Teile aus nichtmagnetisierbaren Material bestehen

Bei dem nichtmagnetisierbaren Material kann es sich beispielsweise um einen Kunststoff oder um ein spezielles, nichtmagnetisierbares Metall bzw. eine Metalllegierung handeln. Bevorzugt wird ein sogenannter "U-Boot-Stahl", also Stahllegierung aus der Gruppe mit den Handelsbezeichnungen:
X 40 Mn Cr N 19 oder
X 2 Cr Ni Mo N 18-14-3 oder
X 2 Cr Ni Mn Mo N Nb 21-16-5-3 oder
X 2 Cr Ni Mn Mo N Nb 23-17-6-3.

Diese Stähle zeichnen sich durch höchste amagnetische Güte aus, daher sind sie durch Verzerrung eines äußeren Magnetfeldes nicht lokalisierbar.

In einer weiteren Ausführungsform kann an der Aufnahmevorrichtung ein Niederhalter zum Niederhalten des Erntegutstroms vorgesehen und der Metalldetektor am Niederhalter angebracht sein. Bei einem Niederhalter handelt es sich um eine Vorrichtung, die mit der Pick-up-Trommel zusammenwirkt und eine obere Einlaufbegrenzung für den Erntegutstrom ausbildet. Hintergrund ist, dass die rotierende Pick-up-Trommel mit den darauf angebrachten Förderzinken das Erntegut zunächst aufhebt und beschleunigt. Ab einer gewissen Beschleunigung oder auch ab einer gewissen Dicke des Erntegutstroms ist nicht mehr sichergestellt, dass der Erntegutstrom vollständig in den Einzugskanal eingezogen wird. Ist an der Aufnahmevorrichtung ein Niederhalter vorgesehen, übt dieser einen Druck von oben auf den Erntegutstrom aus, der in der Regel ausreicht, um den Erntegutstrom vollständig in den Einzugskanal zu leiten. Der Niederhalter besteht im Wesentlichen aus einem Gleitblech, vermehrt aber auch aus Rollen, die den Gutfluss weniger stören.

Wenn der Metalldetektor im oder am Niederhalter angeordnet ist, wird der Erntegutstrom somit in einem der Pick-up-Trommel in Fahrtrichtung gesehen vorgelagerten Bereich untersucht. Je früher bzw. je weiter vorne im Erntegutstrom, ein Metallteil detektiert wird, desto mehr Zeit steht zur Verfügung um den Antrieb zu stoppen und zu verhindern, dass das detektierte Metallteil in den Bereich nachgelagerter Schneidmesser oder anderer empfindlicher Maschinenteile gelangt.

Soweit sich der Untersuchungsbereich vollständig vor der Pick-up-Trommel befindet, ist es nicht erforderlich, dass die Förderzinken und ggf. auch die Pick-up-Trommel selbst aus nicht magnetisierbarem Material bestehen. Wenn jedoch ein Teil der Förderzinken oder der Pick-up-Trommel bei Rotation der Pick-up-Trommel in den Überwachungsbereich hineinragt, müssen Vorkehrungen getroffen werden, damit diese Teile vom Metalldetektor nicht detektiert werden. Wie weiter oben bereits erwähnt geschieht dies, indem grundsätzlich alle Teile, die zumindest zeitweise in den Überwachungsbereich eines Metalldetektors gelangen können, aus nichtmagnetisierbarem Material bestehen.

Weiterhin kann ein Metalldetektor auch an oder in einer der Pick-up-Trommel nachgelagerten Förderwalze vorgesehen sein. Bei der angesprochenen Förderwalze handelt es sich um eine Walze, die direkt im Anschluss an die Pick-up-Trommel angeordnet ist und von dieser den Erntegutstrom übernimmt und weiterfördert. Sie dient dazu, einen kontinuierlichen Erntegutfluss herzustellen und den Einzug des Ernteguts leichtzügig zu gestalten.

Da die Förderwalze der Pick-up nachgelagert, der Metalldetektor jedoch keine Metalleile im Bereich der Schneidvorrichtung detektieren soll, ist der Metalldetektor in Fahrtrichtung ausgerichtet. Der Metalldetektor untersucht den Erntegutstrom somit im hinteren, oberen Bereich der Pick-up. Etwaige im Untersuchungsbereich befindliche Teile der Pick-up bestehen auch bei diesem Ausführungsbeispiel, wie weiter oben schon beschrieben, wiederum aus einem nichtmagnetisierbaren Material.

Als Metalldetektor wird vorzugsweise ein Niederfrequenzdetektor oder Impulsgeber eingesetzt. Wichtig ist, dass der Metalldetektor beim Erfassen des Fremdkörpers ein Erkennungssignal aussendet, das die rotierende Aufnahmevorrichtung schlagartig stoppt. Nach Stoppen des Antriebs können die Fördermittel soweit erforderlich reversiert werden und das detektierte Metallteil kann entfernt werden.

Der Metalldetektor reagiert auf das Magnetfeld verändernde Stoffe, überwiegend auf ferromagnetische, gelegentlich aber auch auf diamagnetische Materialien. Der das Magnetfeld erzeugende Metalldetektor stellt fest, ob das Magnetfeld sich wesentlich ändert. Das geschieht immer dann, wenn ein Fremdkörper mit hinreichend großer Permeabilität in das Magnetfeld gerät. Die Feldänderung ist dabei proportional zur Permeabilität des Materials. Die Permeabilität von ferromagnetischen Stählen ist gegenüber nichtmagnetisierbaren Materialien zumindest 100mal größer und steigt in Abhängigkeit von der magnetischen Feldstärke.

Im Allgemeinen können Niederfrequenzdetektoren (VLF: Very Low Frequency) zum Einsatz kommen, bestehend aus einer Sender- und Empfängerspule. Die Senderspule erzeugt ein magnetisches Wechselfeld. Der metallische Fremdkörper erzeugt ein Gegenfeld, so dass eine Spannung auf der Empfängerspule induziert wird. Weniger geeignet (obwohl möglich) ist ein Impulsgeber, bestehend grundsätzlich aus einer Spule, welche sowohl zur Suche als auch zum Empfang dient. Die Suchspule wird mit einer großen Frequenz von Gleichstrom durchflossen. Wenn der Strom abrupt unterbrochen wird, empfängt die gleiche Spule einen Gegenimpuls. Die Reichweite des Impulsgebers ist groß. Die Erfindung wird in einigen Ausführungsbeispielen anhand der Zeichnung näher erläutert.

Die Figuren zeigen:
- Fig. 1: eine landwirtschaftliche Maschine, hier: einen Ladewagen mit Pickup, in einer vereinfachten, schematischen Seitenansicht;
- Fig. 2: zeigt die Maschine gemäß Fig. 1 in einer schematischen Darstellung bei der Aufnahme eines Erntegutstroms;
- Fig. 3: eine vom Erntegut durchströmte Pickup mit einem in die Trommel eingebauten Metalldetektor und mit Niederhalter, ebenso in einer schematischen Seitenansicht;
- Fig. 4: die Pickup gemäß Fig. 3, jedoch mit angedeutetem stärkerem Magnetfeld, in einer schematischen Seitenansicht;
- Fig. 5: die Pickup gemäß Fig. 3, mit in einem Prallblech des Niederhalters platziertem Metalldetektor, in einer schematischen Seitenansicht;
- Fig. 6: die Pickup mit dem Niederhalter gemäß Fig. 5 in einer schematischen perspektivischen Darstellung;
- Fig. 7: einen in die Trommel eingebauten Metalldetektor, schematisch und
- Fig. 8: eine vom Erntegut durchströmte Pickup mit einem in die Förderwalze eingebauten Metalldetektor in einer schematischen Seitenansicht.

Gleiche oder ähnliche Elemente können in den nachfolgenden Figuren mit gleichen oder ähnlichen Bezugszeichen versehen sein. Ferner enthalten die Figuren der Zeichnung, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht näher beschriebenen Kombinationen zusammengeführt werden können.

Die in den Figuren dargestellten Ausführungsbeispiele haben somit nur beschreibenden Charakter und sind nicht dazu gedacht sind, die Erfindung in irgendeiner Form einzuschränken.

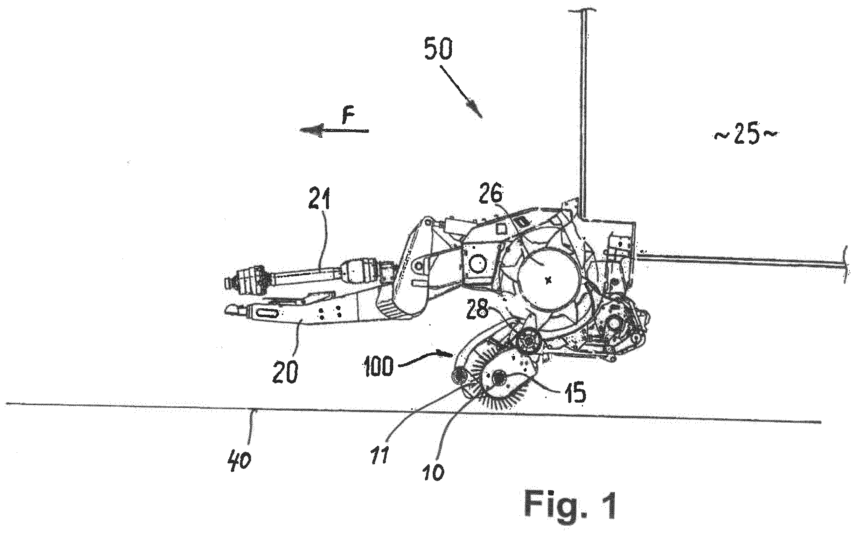

Fig. 1 zeigt eine an einer nicht dargestellten Zugmaschine mittels einer Knickdeichsel 20 gekoppelte landwirtschaftliche Maschine 50 (Ladewagen). Die Maschine 50 umfasst eine über eine Zapfwelle 21 angetriebenen Aufnahmevorrichtung 100 mit einer Pick-up-Trommel 11. In Fahrtrichtung F gesehen hinter der Aufnahmevorrichtung 100 ist eine Schneidvorrichtung 26 und nachfolgend ein Laderaum 25 angeordnet. Weiterhin ist in der Fig. 1 eine der Pick-up-Trommel 11 nachgeschaltete Förderwalze 28 und ein Antriebselement 15 (hier: verdeckter Kettenantrieb) der Pick-up-Trommel 11 zu sehen. Die Pick-up-Trommle 11 rotiert um eine Drehachse 10 und umfasst eine Vielzahl von Förderzinken 13, die einen vom Untergrund 40 aufzunehmenden Erntegutstrom 17 in Richtung Laderaum 25 fördern.

Je nach Einsatz soll die Aufnahmevorrichtung 100 Stroh, Gras, Heu oder sonstige Erntegüter mit unterschiedlichen Eigenschaften vom Untergrund 40 möglichst bodenschonend und gleichzeitig verlustarm aufnehmen.

Figur 2 zeigt die Maschine gemäß Fig. 1 in einer schematischen Darstellung bei der Aufnahme eines Erntegutstroms 17. Der Fluss der Erntegutstroms 17 ist in Richtung R ausgerichtet und durch Pfeile 41 angedeutet. Figur 2 zeigt bespielhaft einige in Betracht kommende Anbringungsstellen für Metalldetektoren 30. Es kann ausreichend sein, lediglich einen Metalldetektor 30 an der Aufnahmevorrichtung 100 vorzusehen, es können aber auch zwei oder drei der dargestellten Metalldetektoren 30 an einer einzigen Aufnahmevorrichtung 100 realisiert werden um so redundante Systeme zu schaffen und das Risiko nicht detektierter Metallteile zu minimieren.

Ein Metalldetektor 30 kann beispielsweise am Niederhalter 19 angeordnet sein und von dort einen Überwachungsbereich 12 detektieren, der der Pick-up-Trommel 11 vorgelagert ist und vom Niederhalter 19 bis zum Untergrund 40 reicht.

Ein Metalldetektor 30 kann aber auch in einem der Pick-up-Trommel 11 in etwa gegenüber liegenden Bereich des Niederhalters 19 angeordnet sein und von dort, in Richtung Pick-up-Trommel 11 ausgerichtet, einen Überwachungsbereich 12 detektieren, bei dem es sich um einen von den Förderzinken 13 zumindest teilweise durchlaufenden Bereich 37 handelt.

Als drittes Beispiel zeigt Fig. 2 einen in die Pick-up-Trommel 11 integrierten Metalldetektor 30, der nach oben, in Richtung Niederhalter 19, ausgerichtet ist und einen Überwachungsbereiche 12 detektiert, bei dem es sich um einen von den Förderzinken 13 durchlaufenden Bereich 37' handelt. Die Bereiche 37 und 37' haben somit gemeinsam, dass sie bei Rotation der Pick-up-Trommel 11 zumindest teilweise von den Förderzinken 13 durchlaufen werden.

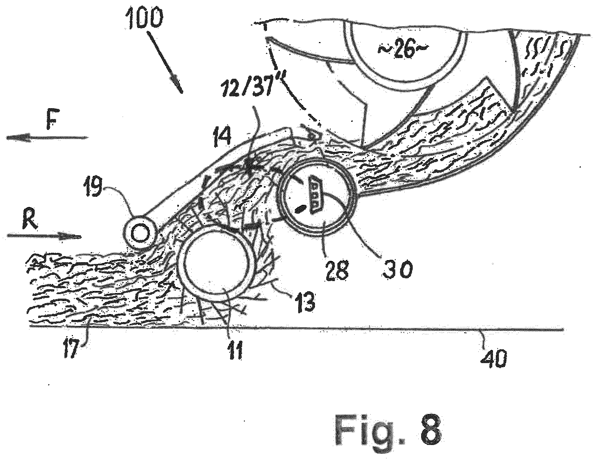

Als viertes Beispiel ist in Figur 2 schließlich ein in eine der Pick-up-Trommel 11 nachgeschaltete Förderwalze 28 integrierter Metalldetektor 30 dargestellt. Der Metalldetektor 30 detektiert in diesem Fall einen Überwachungsbereich 37" der im Wesentlichen in Fahrtrichtung F ausgerichtet ist und somit - gesehen von der Förderwalze 28 aus den Erntegutstrom 17 im Bereich zwischen Pick-up-Trommel 11 und Niederhalter 19 untersucht. Die als viertes Beispiel genannte Ausführungsform ist zusätzlich in Figur 8 schematisch im Detail dargestellt.

In allen dargestellten Beispielfällen bestehen die in einem Überwachungsbereiche 12 angeordneten Teile der Aufnahmevorrichtung 100 aus einem nichtmagnetisierbaren Material wie Kunststoff oder Edelstahl.

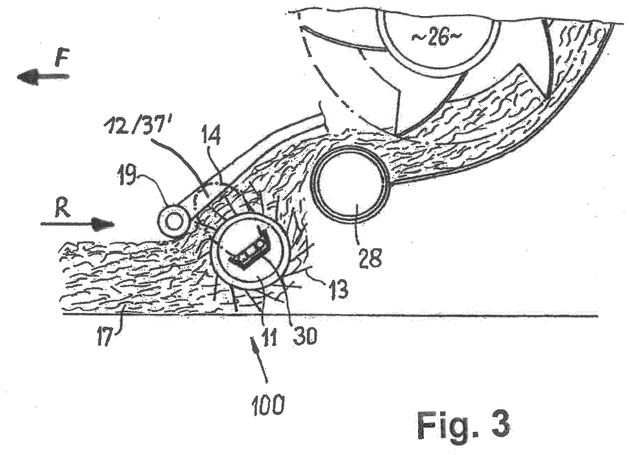

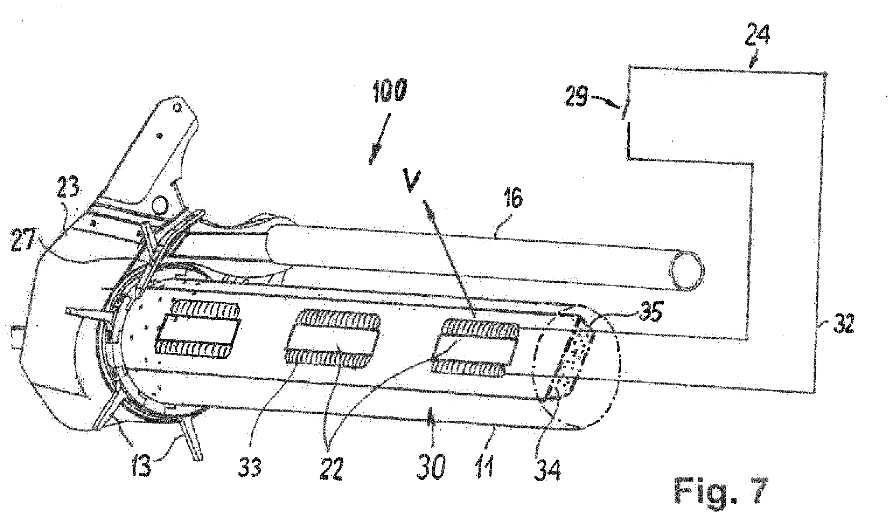

Die Figuren 3, 4 und 7 zeigen das Ausführungsbeispiel eines in die Pick-up-Trommel 11 eingebauten Metalldetektors 30 detaillierter. Der Metalldetektor 30 rotiert nicht zusammen mit der Pick-up-Trommel 11, sondern ist mit seinen beiden Enden ortsfest an seitlichen Teilen eines Rahmens 23 gelagert. Der schematisch in Fig. 7 gezeigte Metalldetektor 30 umfasst einige sich quer zur Förderrichtung R erstreckenden Magnete 22 mit Spulen 33 (in Fig. 7 sind nur drei gezeigt), welche in einen prismatischen, länglichen Kunstharzblock 34 dicht eingeschlossen sind. Der Kunstharzblock 34 kann in einem Trog 35 aus nichtmagnetisierbarem Material, wie Edelstahl, angeordnet sein.

Der Metalldetektor 30 erzeugt ein Magnetfeld 14, welches den mit 12 bezeichneten Überwachungsbereich auf der ganzen Breite eines Erntegutstroms 17 erfasst. Der Überwachungsbereich 12 ist in diesem Fall der Förderzinken-Bereich 37. Der Überwachungsbereich 12 umfasst zumindest das Magnetfeld 14, welches durch den verdichteten Erntegutstrom 17 hindurchtritt.

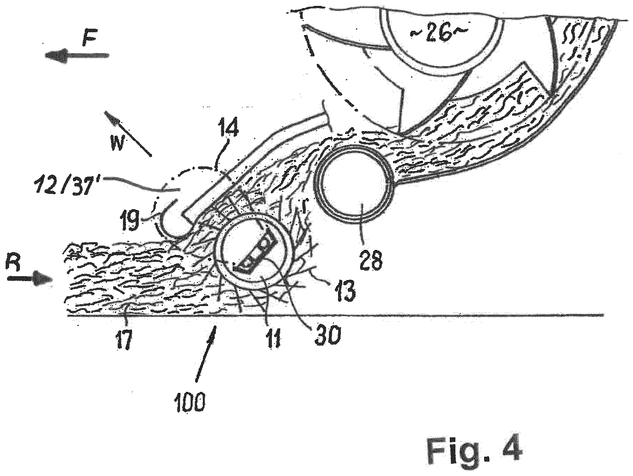

Wird der Metalldetektor 30 mit stärkeren Magneten 22, beispielsweise mit Permanentmagneten bestückt, entsteht ein entsprechend stärkeres Magnetfeld 14 (vgl. Fig. 4), welches im vorliegenden Fall auch einen Niederhalter 19 (hier ein rinnenförmiges Blech, gegebenenfalls mit einem Prallblech) durchdringt. Dementsprechend vergrößert sich auch der Überwachungsbereich 12. Wie die Figuren 3, 4 und 7 zeigen, ist das Magnetfeld 14 ("Flussdichte") mit seinem magnetischen Vektor V senkrecht zum Kunstharzblock 35 gerichtet.

Der Metalldetektor 30 sendet über eine Leitung 32 Signalimpulse an einen Schaltkreis 24 (Überwachungs- und Schaltelektronik) aus, falls ein metallener Fremdkörper erfasst wird und beaufschlagt eine Abschaltvorrichtung 29, welche die Aufnahmevorrichtung 100 automatisch stillsetzt.

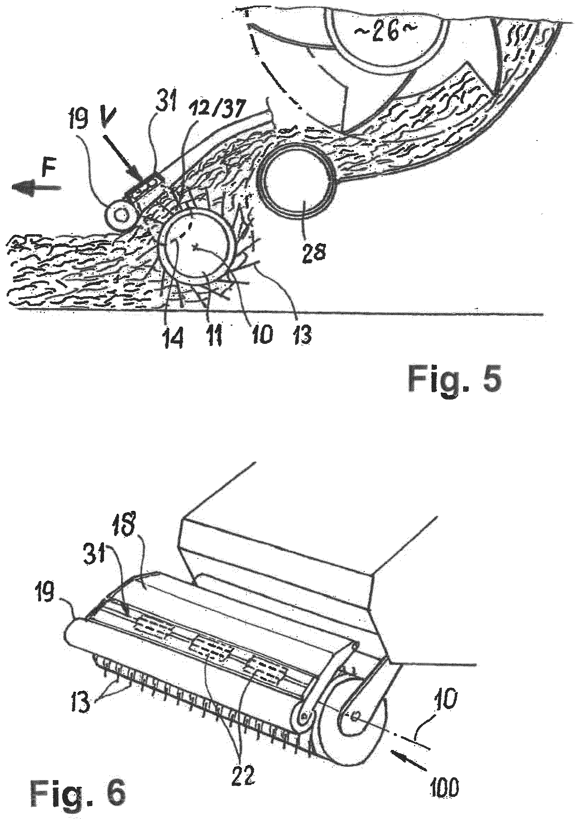

Gemäß Fig. 5 dringt das Magnetfeld 14 durch den verdichteten Bereich des Erntegutstroms 17 oberhalb der Trommel 11, sowie die Förderzinken 13 und einen Teil der Trommel 11 hindurch. Die Flussdichte (Vektor V) ist in dem Fall zwar senkrecht auf den verdichteten Erntegutstrom, jedoch schräg auf die Trommel 11 gerichtet.

Ferner zeigt die Fig. 7 eine parallel zur Trommel 11 verlaufende Welle 16, an der mehrere sich an der Pick-up-Trommel 11 abstützende Abstreifer 27 angeordnet sind.

Die Ausführung gemäß Figuren 6 und 7 zeigt, dass es möglich ist, einen Metalldetektor 30 an dem Niederhalter 19 bzw. an einem Prallblech 18 anzuordnen. Außerdem ist ein heller Licht-LED-Modul in der Fahrerkabine (nicht dargestellt) für das Anzeigen des Bereichs, in dem ein metallischer Fremdkörper detektiert wurde, sowie ein akustisches Signal vorgesehen.

**Bezugszeichenliste**

| | | | |
|---|---|---|---|
| 10 | Drehachse | | |
| 11 | Pick-up-Trommel | 50 | landwirtschaftliche Maschine |
| 12 | Überwachungsbereich | 100 | Aufnahmevorrichtung |
| 13 | Förderzinken | | |
| 14 | Magnetfeld | F | Fahrtrichtung |
| 15 | Antriebselement | R | Richtung |
| 16 | Welle | V | Vektor |
| 17 | Erntegutstrom | | |
| 18 | Prallblech | | |
| 19 | Niederhalter | | |
| 20 | Knickdeichsel | | |
| 21 | Zapfwelle | | |
| 22 | Magnet | | |
| 23 | Rahmen | | |
| 24 | Schaltkreis | | |
| 25 | Laderaum | | |
| 26 | Schneidvorrichtung | | |
| 27 | Abstreifer | | |
| 28 | Förderwalze | | |
| 29 | Abschaltvorrichtung | | |
| 30 | Metalldetektor | | |
| 31 | - | | |
| 32 | Leitung | | |
| 33 | Spule | | |
| 34 | Kunstharzblock | | |
| 35 | Trog | | |
| 36 | vorgelagerter Bereich | | |
| 37, 37', 37" | Förderzinken-Bereich | | |
| 38 | - | | |
| 39 | - | | |
| 40 | Untergrund | | |
| 41 | Pfeil | | |

## Patentansprüche

1. Aufnahmevorrichtung (100) für eine landwirtschaftliche Maschine (50) zur Ernte von Halm- und Blattgut umfassend:
- Fördermittel zum Transport eines Erntegutstroms (17), wobei die Fördermittel dazu eingerichtet sind den Erntegutstrom durch einen Überwachungsbereich (12) bewegen,
- wenigstens einen Metalldetektor (30) zur Erkennung von metallischen Fremdkörpern im Überwachungsbereich (12) befindlichen Erntegutstrom (17), wobei der Metalldetektor (30) wenigstens einen Magnet zur Erzeugung eines Magnetfeldes (14) umfasst, so dass in Abhängigkeit von elektrischen Signalen bei Detektion von Metallteilen im Erntegut mittels eines Steuersignals Antriebselemente (15) der Aufnahmevorrichtung (100) und/oder weiterer nachgeordneter Maschinenkomponenten schaltbar sind,
und wobei das Fördermittel zum Transport des Erntegutstroms (17) eine um eine Drehachse (10) rotierbare Pick-up-Trommel (11) mit einer Vielzahl von an oder auf der Trommel (11) angebrachten und nach außen abstehenden Förderzinken (13) zur Aufnahme des Ernteguts umfasst und der vom Metalldetektor (30) detektierte Überwachungsbereich (12) den Erntegutstrom (17):
- in einem der Pick-up-Trommel (11) vorgelagerten Bereich (36), und/oder
- in einem von den Förderzinken (13) der Pick-up-Trommel (11) durchlaufenen Bereich (37, 37',37") auf das Vorhandensein von Metallteilen detektiert,
**dadurch gekennzeichnet, dass** ein Metalldetektor (30)
- an oder in der Pick-up-Trommel (11) angebracht ist und / oder
- eine Förderwalze (28) zur Weiterleitung des Erntegutstroms (17) von der Pick-up-Trommel (11) vorgesehen ist und ein Metalldetektor (30) an oder in der Förderwalze (28) angebracht ist.

2. Aufnahmevorrichtung (100) nach Anspruch 1, **dadurch gekennzeichnet, dass** der Bereich (36; 37; 37'; 37") frei von magnetisierbarem Material ist.

3. Aufnahmevorrichtung (100) nach Anspruch 1 oder 2, **dadurch gekennzeichnet, dass** ein Niederhalter (19) zum Niederhalten des Erntegutstroms (17) vorgesehen ist und ein weiterer Metalldetektor (30) am Niederhalter (19) angebracht ist.

4. Aufnahmevorrichtung (100) nach einem der Ansprüche 1 bis 3, **dadurch gekennzeichnet, dass** die Pick-up-Trommel (11) und/oder der Niederhalter (19) und oder die Förderwalze (28) frei von magnetisierbarem Material ist.

5. Aufnahmevorrichtung (100) nach einem der Ansprüche 1 bis 4, **dadurch gekennzeichnet, dass** es sich bei der Pick-up-Trommel (11) um eine ungesteuerte Pick-up-Trommel handelt.

6. Aufnahmevorrichtung (100) nach einem der Ansprüche 1 bis 5, **dadurch gekennzeichnet, dass** der Metalldetektor (30) beim Detektieren eines im Erntegutstrom (17) befindlichen metallenen Fremdkörpers ein Signal aussendet, das über einen Schaltkreis (24) die rotierende Aufnahmevorrichtung (100) schlagartig stoppt.

7. Aufnahmevorrichtung (100) nach einem der Ansprüche 1 bis 6, **dadurch gekennzeichnet, dass** die Förderzinken (13) aus magnetresistentem thermoplastischem Kunststoff gefertigt sind.

8. Aufnahmevorrichtung (100) nach einem der Ansprüche 1 bis 7, **dadurch gekennzeichnet, dass** als Metalldetektor (30) ein Niederfrequenzdetektor oder Impulsgeber eingesetzt ist.

## Claims

1. A pick-up device (100) for an agricultural machine (50) for harvesting stalk and leaf material comprising:
- conveying means for transporting a crop stream (17), wherein the conveying means are equipped to move the crop stream through a monitoring area (12),
- at least one metal detector (30) for detecting metallic foreign bodies in the crop stream (17) located in the monitoring area (12), wherein the metal detector (30) comprises at least one magnet for generating a magnetic field (14), such that in dependence on electrical signals, upon detection of metal parts in the crop, drive elements (15) of the pick-up device (100) and/or further downstream machine components can be switched by means of a control signal,
and wherein the conveying means for transporting the crop stream (17) comprises a pick-up drum (11) rotatable about an axis of rotation (10) and having a plurality of conveying tines (13) attached to or on the drum (11) and projecting outwardly for receiving the crop and the monitoring area (12) detected by the metal detector (30) controls the crop flow (17):
- in an area (36) upstream of the pick-up drum (11), and/or
- in an area (37, 37', 37") passed through by the conveyor tines (13) of the pick-up drum (11)
for the presence of metal parts, **characterized in that** a metal detector (30)
- is mounted on or in the pick-up drum (11) and/or
- a conveyor roller (28) is provided for forwarding the crop stream (17) from the pick-up drum (11) and a metal detector (30) is disposed on or in the conveyor roller (28).

2. The pick-up device (100) as claimed in claim 1, **characterized in that** the area (36; 37; 37'; 37") is free of magnetizable material.

3. The pick-up device (100) as claimed in claim 1 or 2, **characterized in that** a hold-down device (19) is provided for holding down the crop stream (17) and a further metal detector (30) is attached to the hold-down device (19).

4. The pick-up device (100) as claimed in any one of the claims 1 to 3, **characterized in that** the pick-up drum (11) and/or the hold-down device (19) and/or the conveyor roller (28) is free of magnetizable material.

5. The pick-up device (100) as claimed in any one of the claims 1 to 4, **characterized in that** the pick-up drum (11) is an unregulated pick-up drum.

6. The pick-up device (100) as claimed in any one of the claims 1 to 5, **characterized in that** the metal detector (30), upon detecting a metallic foreign body present in the crop stream (17), emits a signal which causes the rotating pick-up device (100) to abruptly stop via a circuit (24).

7. The pick-up device (100) as claimed in any one of the claims 1 to 6, **characterized in that** the conveying tines (13) are made of magnet-resistant thermoplastic material.

8. The pick-up device (100) as claimed in any one of the claims 1 to 7, **characterized in that** a low-frequency detector or pulse generator is used as the metal detector (30).

## Revendications

1. Dispositif de réception (100) pour une machine agricole (50) pour la récolte de produits en tiges et en feuilles, comprenant :
- des moyens d'acheminement pour le transport d'un courant de produit de récolte (17), les moyens d'acheminement étant adaptés pour déplacer le courant de produit de récolte à travers une zone de surveillance (12),
- au moins un détecteur de métaux (30) pour l'identification de corps étrangers métalliques dans le courant de produit de récolte (17) se trouvant dans la zone de surveillance (12), le détecteur de métaux (30) comprenant au moins un aimant pour la production d'un champ magnétique (14), de telle sorte qu'en fonction de signaux électriques, lors de la détection de pièces métalliques dans le produit de récolte, des éléments d'entraînement (15) du dispositif de réception (100) et/ou d'autres composants de machine agencés en aval peuvent être commutés au moyen d'un signal de commande,
et le moyen d'acheminement pour le transport du courant de produit de récolte (17) comprenant un tambour de ramassage (11) pouvant tourner autour d'un axe de rotation (10) avec une pluralité de dents d'acheminement (13) montées au niveau de ou sur le tambour (11) et faisant saillie vers l'extérieur pour la réception du produit de récolte, et la zone de surveillance (12) détectée par le détecteur de métaux (30) détectant la présence de pièces métalliques dans le courant de produit de récolte (17) :
- dans une zone (36) située en amont du tambour de ramassage (11), et/ou
- dans une zone (37, 37', 37") traversée par les dents d'acheminement (13) du tambour de ramassage (11),
**caractérisé en ce qu'**un détecteur de métaux (30)
- est monté au niveau de ou dans le tambour de ramassage (11) et/ou
- un rouleau d'acheminement (28) est prévu pour le transfert du courant de produit de récolte (17) à partir du tambour de ramassage (11) et un détecteur de métaux (30) est monté au niveau de ou dans le rouleau d'acheminement (28).

2. Dispositif de réception (100) selon la revendication 1, **caractérisé en ce que** la zone (36 ; 37 ; 37' ; 37") est exempte de matériau magnétisable.

3. Dispositif de réception (100) selon la revendication 1 ou 2, **caractérisé en ce qu'**un serre-flanc (19) est prévu pour maintenir le courant de produit de récolte (17) et un autre détecteur de métaux (30) est monté sur le serre-flan (19).

4. Dispositif de réception (100) selon l'une quelconque des revendications 1 à 3, **caractérisé en ce que** le tambour de ramassage (11) et/ou le serre-flan (19) et/ou le rouleau d'acheminement (28) est exempt de matériau magnétisable.

5. Dispositif de réception (100) selon l'une quelconque des revendications 1 à 4, **caractérisé en ce que** le tambour de ramassage (11) consiste en un tambour de ramassage non contrôlé.

6. Dispositif de réception (100) selon l'une quelconque des revendications 1 à 5, **caractérisé en ce que** le détecteur de métaux (30), lors de la détection d'un corps étranger métallique se trouvant dans le courant de produit de récolte (17), émet un signal qui, par l'intermédiaire d'un circuit de commutation (24), arrête brusquement le dispositif de réception (100) en rotation.

7. Dispositif de réception (100) selon l'une quelconque des revendications 1 à 6, **caractérisé en ce que** les dents d'acheminement (13) sont fabriquées en matière thermoplastique magnétorésistante.

8. Dispositif de réception (100) selon l'une quelconque des revendications 1 à 7, **caractérisé en ce qu'**un détecteur à basse fréquence ou un générateur d'impulsions est utilisé en tant que détecteur de métaux (30).
